# FASCICULE DE BREVET EUROPEEN

(11) **EP 3 790 777 B1**
(45) Date de publication et mention de la délivrance du brevet: **23.08.2023**
(21) Numéro de dépôt: 19720595.8
(22) Date de dépôt: 30.04.2019
(51) Int. Cl.: B60T 13/46, B60T 17/02

(54) **SYSTEME DE FREINAGE D'UN VEHICULE COMPRENANT UNE POMPE A VIDE ET UN RENIFLARD**
BREMSSYSTEM EINES FAHRZEUGES MIT EINER VAKUUMPUMPE UND EINER ENTLÜFTUNG
BRAKING SYSTEM OF A VEHICLE COMPRISING A VACUUM PUMP AND A BREATHER

(30) Priorité: 07.05.2018 FR 1853909
(43) Date de publication de la demande: 17.03.2021
(73) Titulaire: Renault s.a.s, 92100 Boulogne Billancourt (FR)
(72) Inventeur: LURON, Stevens, 27220 CHAVIGNY - BAILLEUL (FR); LAMARE, Max, 91410 DOURDAN (FR); GHIRARDINI, Armand, 78114 Magny les Hameaux (FR)
(74) Mandataire: Renault Group
(86) Numéro de dépôt international: PCT/EP2019/061016
(87) Numéro de publication internationale: WO 2019/214993

(56) Documents cités:
- CN-U- 203 063 935
- JP-A- 2007 170 487
- JP-A- 2010 077 984

## Description

L'invention se rapporte à un système de freinage d'un véhicule comprenant une pompe à vide et un reniflard.

De façon générale, le compartiment moteur des véhicules actuels est très contraint, de sorte que l'espace disponible pour l'implantation de nouveaux composants est réduit.

Dans certains pays, pour des types de moteurs donnés ou pour certains niveaux de prestation, il est nécessaire d'ajouter une pompe à vide au système de freinage pour garantir un freinage efficace. Pour assurer le bon fonctionnement de cette pompe à vide et pour éviter les zones immersibles, il est nécessaire d'installer un reniflard au-dessus de ladite pompe. Dans certains cas, il est par exemple recommandé de fixer ce reniflard à une altitude de 450mm au-dessus du plan de l'origine du véhicule Z0 située au niveau du plancher. Pour rappel, un reniflard pour un système de freinage est une soupape provoquant systématiquement une rentrée d'air dans un milieu où se produit une dépression.

Ce reniflard est lié à la prestation freinage demandée, et est seulement requis dans certains pays, pour s'assurer d'une absence d'entrée d'eau, notamment lors d'un passage à gué.

La demande JP2007170487 décrit un système de fixation d'un reniflard dans un compartiment moteur de véhicule, qui est complexe à mettre en oeuvre en raison notamment du nombre de pièces impliquées, et qui nécessite un temps de montage long.

Le document CN 203 063 935 U montre un système de freinage comprenant une pompe à vide, un reniflard et une tubulure.

Un système de freinage selon l'invention, comprend un système de fixation d'un reniflard qui s'affranchit des inconvénients rencontrés dans l'état de la technique.

L'invention a pour objet un système de freinage d'un véhicule comprenant une pompe à vide et un reniflard placé au-dessus de ladite pompe à vide, ledit reniflard reliant la pompe à vide au moyen d'une tubulure.

Selon l'invention, le reniflard est monté dans le véhicule au moyen d'une pièce support déportée par rapport à ladite tubulure, ladite pièce support étant destinée à être solidarisée à un élément de fermeture d'un passage de roue du véhicule. Le montage du reniflard est simple et facile à mettre en oeuvre, car il implique un nombre limité de pièces. De plus, un tel reniflard peut être placé à une hauteur importante dans le véhicule, en fonction de la géométrie et des dimensions de la pièce support. Avantageusement, la tubulure et la pièce support s'étendent dans une direction sensiblement verticale, et sont décalées l'une par rapport à l'autre. La pièce support peut être fixée par tout moyen à l'élément de fermeture du passage de roue, comme par exemple par soudure, par vissage ou au moyen de clips.

Avantageusement, la pièce support est destinée à être solidarisée à l'élément de fermeture du passage de roue au moyen d'un seul point de fixation. De cette manière, le montage du reniflard est simple et rapide à mettre en oeuvre, et implique des moyens de fixation limités, participant à l'allègement du véhicule. Un point de fixation peut par exemple être représenté par une vis et un écrou, ou un clip.

De façon préférentielle, le point de fixation est réalisé au moyen d'une vis et d'un écrou. Il s'agit d'un moyen de fixation bien maitrisé, et dont les coûts sont limités.

Préférentiellement, la pièce support dispose d'un moyen anti-rotation apte à coopérer avec un moyen anti-rotation complémentaire de l'élément de fermeture du passage de roue pour empêcher la pièce support de pivoter relativement audit élément de fermeture. En effet, avec un seul point de fixation sur l'élément de fermeture du passage de roue, la pièce support est susceptible de pivoter par rapport à cet élément de fermeture autour de ce point de fixation, et il est donc nécessaire d'insérer des moyens anti-rotation entre la pièce support et l'élément de fermeture, pour bloquer en rotation ladite pièce support sur ledit élément de fermeture.

De façon avantageuse, le moyen anti-rotation est une patte de fixation recourbée et le moyen anti-rotation complémentaire est une ouverture, ladite patte étant destinée à être insérée dans ladite ouverture sans possibilité de se déplacer relativement à cette ouverture. Avantageusement, l'ouverture existait déjà sur l'élément de fermeture du passage de roue, et la patte de fixation recourbée a été élaborée en tenant compte de la présence de cette ouverture. L'interaction entre la patte et l'ouverture, est déportée par rapport au point de fixation.

Avantageusement, la pièce support maintient le reniflard au moyen d'un élément de serrage solidarisé à ladite pièce support. Cet élément de serrage est assimilable à une pince apte à enserrer étroitement le reniflard de façon à le maintenir dans une position stable.

De façon préférentielle, l'élément de serrage est une agrafe possédant deux portions incurvées et articulées, lesdites deux portions étant aptes à se refermer autour dudit reniflard et à se fixer l'une à l'autre pour former un collier de serrage. Pour cette configuration, le reniflard est avantageusement de forme cylindrique.

Préférentiellement, la pièce support est métallique.

De façon avantageuse, la pièce support présente une pliure pour permettre le passage d'un câblage présent dans le véhicule. En effet, la forme et les dimensions de la pièce support sont adaptées de manière à tenir compte de la présence d'autres éléments dans le véhicule.

Avantageusement, la pièce support est de faible épaisseur, et comprend un segment central sensiblement horizontal, prolongé d'un côté par une patte s'étendant vers le haut et destinée à maintenir le reniflard, et de l'autre côté par une patte circulaire au milieu de laquelle est réalisé le point de fixation. Il s'agit d'un exemple illustratif et non limitatif, d'une pièce support adaptée à un environnement particulier d'un véhicule. Il est avantageusement recherché d'épurer les formes de la pièce support afin de limiter le temps d'usinage de ladite pièce et les coûts associés.

Un système de freinage selon l'invention présente l'avantage de comprendre un reniflard pouvant être placé à une hauteur importante dans le véhicule, pour préserver ledit reniflard, lors par exemple d'un passage à gué du véhicule. Il a de plus l'avantage d'impliquer un système de fixation du reniflard qui est simple et rapide à mettre en oeuvre en raison du nombre limité des pièces impliquées et de la géométrie simple de celles-ci.

On donne ci-après une description détaillée d'un mode de réalisation préféré d'un système de freinage selon l'invention, en se référant aux figures suivantes :
- La figure 1 est une vue en perspective d'un système de freinage selon l'invention,
- La figure 2 est une vue en perspective sous un autre angle d'un système de freinage selon l'invention,
- La figure 3 est une vue de côté d'un système de freinage selon l'invention,
- La figure 4 est une en perspective sous un autre angle d'un système de freinage selon l'invention,
- La figure 5 est une vue en perspective d'un système de freinage selon l'invention, montrant au premier plan un élément de fermeture d'un passage de roue.

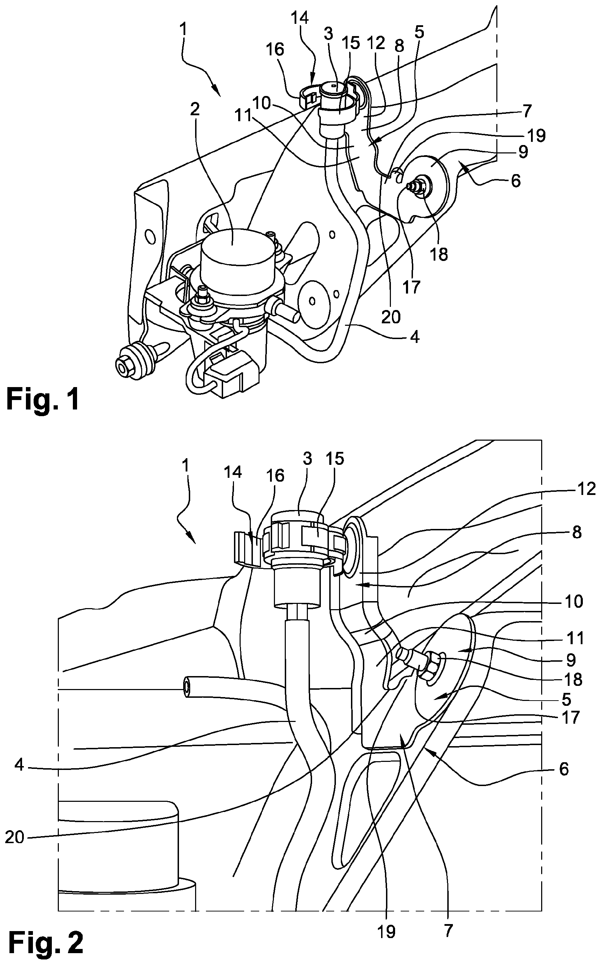

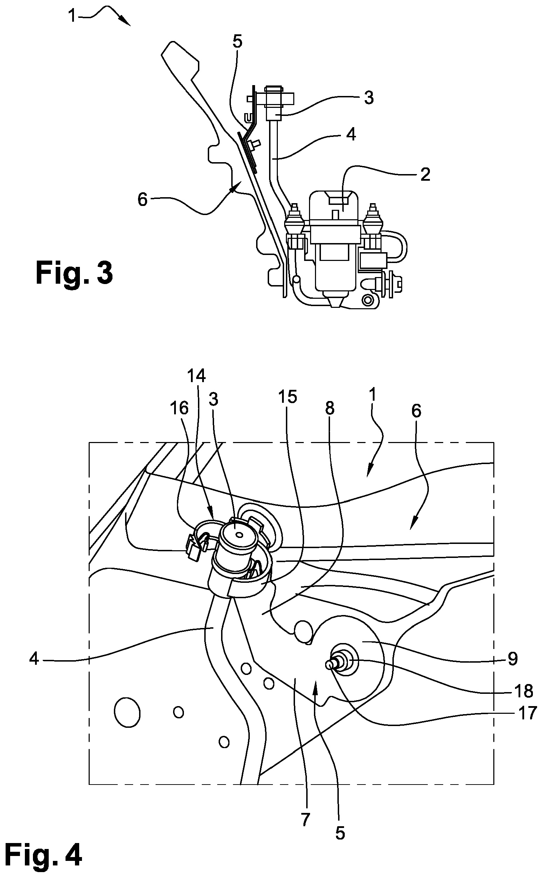

En se référant aux figures 1 et 3, un système de freinage 1 selon l'invention, comprend une pompe à vide 2 et un reniflard 3 placé au-dessus de ladite pompe à vide 2 et relié à celle-ci au moyen d'une tubulure 4 s'étendant majoritairement dans une direction sensiblement verticale.

En se référant aux figures 1, 2, 3, 4 et 5, le reniflard 3 est fixé dans le véhicule au-dessus de la pompe à vide 2 au moyen d'une pièce support 5 préférentiellement réalisée en métal, et arrimée à un élément de fermeture 6 d'un passage de roue.

En se référant aux figures 1 et 2, la pièce support 5 est de faible épaisseur, inférieure à 10mm, et possède un segment central 7 s'étendant dans une direction sensiblement horizontale. Ce segment central 7 est prolongé d'un côté par une patte de fixation 8 s'étendant vers le haut selon un axe sensiblement vertical, et destinée à supporter le reniflard 3, et est prolongé de l'autre côté par une patte circulaire pleine 9 placée légèrement au-dessus du segment central 7.

En se référant à la figure 2, la patte de fixation 8 présente une pliure 10 permettant de distinguer un premier segment plan 11 et un deuxième segment plan 12, lesdits deux segments 11, 12 étant parallèles et dans le prolongement l'un de l'autre. En raison de la présence de cette pliure 10, ces deux segments 11, 12 sont décalés l'un par rapport à l'autre. Cette pliure 10 n'est pas directement corrélée au support du reniflard 3, mais a été néanmoins rendue nécessaire pour tenir compte de la présence d'un câblage dans le véhicule, et permettre son passage sans le déformer ou sans le dévier de façon trop marquée. Le premier segment 11 est placé entre le segment central 7 et le deuxième segment 12, et en-dessous dudit deuxième segment 12. Le deuxième segment 12 comporte une extrémité libre se terminant par une agrafe 14 destinée à enserrer le reniflard 3 pour le maintenir de façon étroite et stable dans le véhicule. Cette agrafe 14 comprend deux portions 15, 16 incurvées et complémentaires, et qui sont reliées l'une à l'autre de façon articulée. De cette manière, ces deux portions 15, 16 peuvent être écartées l'une de l'autre afin d'être placées de part et d'autre du reniflard 3, puis peuvent se refermer par rotation autour dudit reniflard 3 et se fixer l'une à l'autre, en formant un collier de serrage annulaire et circulaire. Les deux portions 15, 16 de l'agrafe 14 s'étendent dans un plan, qui est perpendiculaire au plan du deuxième segment 12 de la pièce support 5 et dans lequel elles sont implantées.

En se référant aux figures 1, 2 et 4, la pièce support 5 est fixée à l'élément de fermeture 6 du passage de roue par l'intermédiaire d'une seule vis 17 associée à un écrou 18, ladite vis 17 traversant la patte circulaire pleine 9 de la pièce support 5, en son milieu. Autrement dit, de façon schématique, une première extrémité 9 de la pièce support 5 est fixée à l'élément de fermeture 6 du passage de roue, et une deuxième extrémité 12 de ladite pièce support 5 soutient le reniflard 3.

Puisque la pièce support 5 ne possède qu'un seul point de fixation à l'élément de fermeture 6 du passage de roue, par l'intermédiaire de la vis 17 et de l'écrou 18, elle est donc susceptible de pivoter autour de ladite vis 17. Afin d'empêcher un tel pivotement, le segment central 7 de ladite pièce support 5 dispose d'une patte de fixation repliée 19 saillant d'un bord supérieur 20 dudit segment central 7.

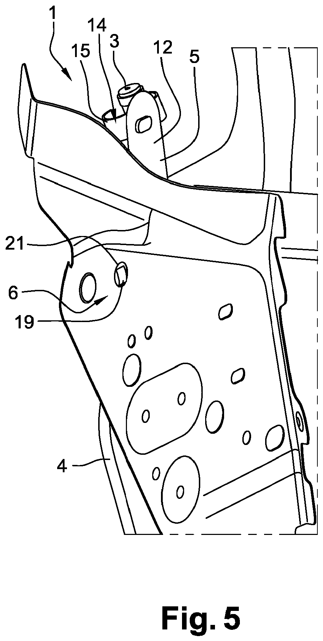

En se référant à la figure 5, l'emplacement, la géométrie et les dimensions de cette patte repliée 19 ont été conçus en prévision d'une insertion de celle-ci dans une ouverture 21 déjà existante dans l'élément de fermeture 6 du passage de roue. Cette patte repliée 19 vient donc s'accrocher à une paroi de l'élément de fermeture 6 délimitant cette ouverture 21, sans possibilité d'être déplacée relativement à cette ouverture 21.

Selon un exemple non limitatif d'implantation de ce reniflard 3 dans le véhicule, celui-ci est placé à une hauteur de 450mm au-dessus du plan de l'origine du véhicule Z0 située au niveau du plancher. Cette hauteur est particulièrement importante et permet de préserver le reniflard 3, lors par exemple d'un passage à gué du véhicule.

## Revendications

1. Système de freinage (1) d'un véhicule comprenant une pompe à vide (2) et un reniflard (3) placé au-dessus de ladite pompe à vide (2), ledit reniflard (3) reliant la pompe à vide (2) au moyen d'une tubulure (4), **caractérisé en ce que** le reniflard (3) est monté dans le véhicule au moyen d'une pièce support (5) déportée par rapport à ladite tubulure (4), et **en ce que** ladite pièce support (5) est destinée à être solidarisée à un élément de fermeture (6) d'un passage de roue du véhicule.

2. Système de freinage selon la revendication 1, **caractérisé en ce que** la pièce support (5) est destinée à être solidarisée à l'élément de fermeture (6) du passage de roue au moyen d'un seul point de fixation (17, 18).

3. Système de freinage selon la revendication 2, **caractérisé en ce que** le point de fixation est réalisé au moyen d'une vis (17) et d'un écrou (18).

4. Système de freinage selon l'une quelconque des revendications 2 ou 3, **caractérisé en ce que** la pièce support (5) dispose d'un moyen anti-rotation (19) apte à coopérer avec un moyen anti-rotation complémentaire (21) de l'élément de fermeture (6) du passage de roue pour empêcher la pièce support (5) de pivoter relativement audit élément de fermeture (6).

5. Système de freinage selon la revendication 4, **caractérisé en ce que** le moyen anti-rotation est une patte de fixation recourbée (19) et le moyen anti-rotation complémentaire est une ouverture (21), et **en ce que** ladite patte (19) est destinée à être insérée dans ladite ouverture (21) sans possibilité de se déplacer relativement à cette ouverture (21).

6. Système de freinage selon l'une quelconque des revendications 2 à 5, **caractérisé en ce que** la pièce support (5) maintient le reniflard (3) au moyen d'un élément de serrage (14, 15, 16) solidarisé à ladite pièce support (5).

7. Système de freinage selon la revendication 6, **caractérisé en ce que** l'élément de serrage est une agrafe (14) possédant deux portions (15, 16) incurvées et articulées, et **en ce que** lesdits deux portions (15, 16) sont aptes à se refermer autour dudit reniflard (3) et à se fixer l'une à l'autre pour former un collier de serrage.

8. Système de freinage selon l'une quelconque des revendications 2 à 7, **caractérisé en ce que** la pièce support (5) est métallique.

9. Système de freinage selon l'une quelconque des revendications 2 à 8, **caractérisé en ce que** la pièce support (5) présente une pliure (10) pour permettre le passage d'un câblage présent dans le véhicule.

10. Système de freinage selon l'une quelconque des revendications 2 à 9, **caractérisé en ce que** la pièce support (5) est de faible épaisseur, et **en ce que** ladite pièce support (5) comprend un segment central (7) sensiblement horizontal, prolongé d'un côté par une patte (8) s'étendant vers le haut et destinée à maintenir le reniflard (3) et est prolongé de l'autre côté par une patte circulaire (9) au milieu de laquelle est réalisé le point de fixation (17, 18).

## Patentansprüche

1. Bremssystem (1) für ein Fahrzeug, umfassend eine Vakuumpumpe (2) und einen über der Vakuumpumpe (2) angeordneten Entlüfter (3), wobei der Entlüfter (3) die Vakuumpumpe (2) mit Hilfe eines Stutzens (4) verbindet, **dadurch gekennzeichnet, dass** der Entlüfter (3) mit Hilfe eines Tragteils (5), das in Bezug auf den Stutzen (4) versetzt ist, im Fahrzeug montiert ist, und dass das Tragteil (5) dazu bestimmt ist, fest mit einem Verschlusselement (6) eines Radkastens des Fahrzeugs verbunden zu sein.

2. Bremssystem nach Anspruch 1, **dadurch gekennzeichnet, dass** das Tragteil (5) dazu bestimmt ist, anhand eines einzigen Befestigungspunkts (17, 18) fest mit dem Verschlusselement (6) des Radkastens verbunden zu sein.

3. Bremssystem nach Anspruch 2, **dadurch gekennzeichnet, dass** der Befestigungspunkt mit Hilfe einer Schraube (17) und einer Mutter (18) ausgeführt ist.

4. Bremssystem nach einem der Ansprüche 2 oder 3, **dadurch gekennzeichnet, dass** das Tragteil (5) über ein Drehsicherungsmittel (19) verfügt, das dazu in der Lage ist, mit einem komplementären Drehsicherungsmittel (21) des Verschlusselements (6) des Radkastens zusammenzuwirken, um ein Drehen des Tragteils (5) relativ zum Verschlusselement (6) zu verhindern.

5. Bremssystem nach Anspruch 4, **dadurch gekennzeichnet, dass** das Drehsicherungsmittel eine gebogene Befestigungslasche (19) ist und das komplementäre Drehsicherungsmittel eine Öffnung (21) ist und dass die Lasche (19) dazu bestimmt ist, in die Öffnung (21) eingeführt zu werden, ohne die Möglichkeit, sich relativ zu dieser Öffnung (21) zu bewegen.

6. Bremssystem nach einem der Ansprüche 2 bis 5, **dadurch gekennzeichnet, dass** das Tragteil (5) den Entlüfter (3) mit Hilfe eines fest mit dem Tragteil (5) verbundenen Klemmelements (14, 15, 16) hält.

7. Bremssystem nach Anspruch 6, **dadurch gekennzeichnet, dass** das Klemmelement eine Klammer (14) ist, die zwei gebogene und gelenkige Abschnitte (15, 16) besitzt, und dass die beiden Abschnitte (15, 16) dazu in der Lage sind, sich um den Entlüfter (3) zu schließen und aneinander zu befestigen, um eine Klemmschelle zu bilden.

8. Bremssystem nach einem der Ansprüche 2 bis 7, **dadurch gekennzeichnet, dass** das Tragteil (5) aus Metall ist.

9. Bremssystem nach einem der Ansprüche 2 bis 8, **dadurch gekennzeichnet, dass** das Tragteil (5) einen Knick (10) aufweist, um die Durchführung einer im Fahrzeug vorhandenen Verkabelung zu ermöglichen.

10. Bremssystem nach einem der Ansprüche 2 bis 9, **dadurch gekennzeichnet, dass** das Tragteil (5) eine geringe Dicke aufweist und dass das Tragteil (5) ein im Wesentlichen horizontales Mittelsegment (7) umfasst, das auf einer Seite durch eine Lasche (8) verlängert ist, die sich nach oben erstreckt und dazu bestimmt ist, den Entlüfter (3) zu halten, und auf der anderen Seite durch eine kreisförmige Lasche (9) verlängert ist, in deren Mitte der Befestigungspunkt (17, 18) ausgebildet ist.

## Claims

1. Braking system (1) of a vehicle, comprising a vacuum pump (2) and a breather (3) positioned above said vacuum pump (2), said breather (3) being connected to the vacuum pump (2) by means of a pipe (4), **characterized in that** the breather (3) is mounted in the vehicle by means of a support part (5) spaced apart from said pipe (4), and **in that** said support part (5) is intended to be secured to a closure element (6) for a wheel arch of the vehicle.

2. Braking system according to Claim 1, **characterized in that** the support part (5) is intended to be secured to the closure element (6) for the wheel arch by means of a single fixing point (17, 18).

3. Braking system according to Claim 2, **characterized in that** the fixing point is realized by means of a screw (17) and a nut (18).

4. Braking system according to either one of Claims 2 and 3, **characterized in that** the support part (5) has a rotation-prevention means (19) that is able to cooperate with a complementary rotation-prevention means (21) of the closure element (6) for the wheel arch so as to prevent the support part (5) from pivoting relative to said closure element (6).

5. Braking system according to Claim 4, **characterized in that** the rotation-prevention means is a curved fixing lug (19) and the complementary rotation-prevention means is an opening (21), and **in that** said lug (19) is intended to be inserted into said opening (21) without being able to move relative to this opening (21).

6. Braking system according to any one of Claims 2 to 5, **characterized in that** the support part (5) holds the breather (3) by means of a clamping element (14, 15, 16) secured to said support part (5).

7. Braking system according to Claim 6, **characterized in that** the clamping element is a clip (14) having two curved and articulated portions (15, 16), and **in that** said two portions (15, 16) are able to close about said breather (3) and to be fixed together to form a clamping collar.

8. Braking system according to any one of Claims 2 to 7, **characterized in that** the support part (5) is metallic.

9. Braking system according to any one of Claims 2 to 8, **characterized in that** the support part (5) has a kink (10) to allow the passage of wiring present in the vehicle.

10. Braking system according to any one of Claims 2 to 9, **characterized in that** the support part (5) has a small thickness, and **in that** said support part (5) comprises a substantially horizontal central segment (7) that is extended on one side by a lug (8) that extends upward and is intended to hold the breather (3), and is extended on the other side by a circular lug (9), in the middle of which the fixing point (17, 18) is realized.
